# EUROPÄISCHE PATENTSCHRIFT

(11) **EP 2 356 615 B1**
(45) Veröffentlichungstag und Bekanntmachung des Hinweises auf die Patenterteilung: **26.07.2017**
(21) Anmeldenummer: 09756419.9
(22) Anmeldetag: 29.10.2009
(51) Int. Cl.: G06K 19/06

(54) **SICHERHEITSELEMENT MIT EINER MASCHINENLESBAREN CODIERUNG**
SECURITY ELEMENT WITH MACHINE-READABLE CODING
ÉLÉMENT DE SÉCURITÉ AVEC CODAGE LISIBLE PAR MACHINE

(30) Priorität: 14.11.2008 DE 102008057320
(43) Veröffentlichungstag der Anmeldung: 17.08.2011
(73) Patentinhaber: Giesecke & Devrient GmbH, 81677 München (DE)
(72) Erfinder: SCHIFFMANN, Peter, 85354 Freising (DE); OTTO, Daniela, 81669 München (DE); ZERBES, Jürgen, 81247 München (DE); REINER, Harald, 81371 München (DE); MAYER, Karlheinz, 88167 Grünebach (DE); PLASCHKA, Reinhard, 86938 Schondorf (DE); HOLL, Norbert, 82110 Germering (DE); NEVELING, Marianne, 81377 München (DE); STEIN, Dieter, 83607 Holzkirchen (DE); PILLO, Thorsten, Hong Kong (HK)
(86) Internationale Anmeldenummer: PCT/EP2009/007727
(87) Internationale Veröffentlichungsnummer: WO 2010/054747

(56) Entgegenhaltungen:
- EP-A1- 0 601 679
- WO-A1-2007/125258
- DE-A1- 10 159 521
- US-A- 5 599 578
- US-B1- 7 108 183

## Beschreibung

Die Erfindung betrifft ein Sicherheitselement mit einer maschinenlesbaren Codierung, ein Verfahren zum Herstellen eines derartigen Sicherheitselements sowie ein Sicherheitspapier und einen Datenträger mit einem solchen Sicherheitselement.

Wertdokumente, wie etwa Banknoten, Aktien, Anleihen, Urkunden, Gutscheine, Schecks, hochwertige Eintrittskarten, sowie andere fälschungsgefährdete Sicherheitsdokumente, wie Pässe, Visa oder sonstige Ausweisdokumente, werden zur Absicherung in der Regel mit Sicherheitsmerkmalen versehen, die eine Überprüfung der Echtheit des Dokuments erlauben und die zugleich als Schutz vor unerlaubter Reproduktion dienen.

Die Sicherheitsmerkmale sind oft maschinenlesbar ausgebildet, um eine automatische Echtheitsprüfung und gegebenenfalls eine weitergehende sensorische Erfassung und Bearbeitung der Dokumente zu ermöglichen. Ein Beispiel für ein maschinenlesbares Sicherheitsmerkmal für Banknoten ist ein Code auf Basis von infrarot-sichtbaren und nicht infrarot-sichtbaren Flächenbereichen, die auf einer Banknote in Form einer vorgegebenen Codierung angeordnet sind. Für die Erkennung eines solchen Infrarot-Merkmals wird typischerweise ein Sensor eines Banknotenbearbeitungssystems eingesetzt.

Die Schrift US 7,108,183 beschreibt ein Etikett ("label"), das auf Papier basiert und das mit maschinenlesbaren Zeichen ausgestattet ist. Die maschinenlesbaren Zeichen sind bei Bestrahlung mit Infrarot-Strahlung oder UV-Strahlung lesbar. Das Etikett ist insbesondere ein Barcode.

Die Schrift DE 101 59 521 A1 beschreibt eine Anordnung zur Identifikation von Gegenständen, welche mit einer für das menschliche Auge wahrnehmbaren grafischen oder textlichen Kennzeichnung versehen sind. Diese Kennzeichnung umfasst eine Vielzahl kleinster Informationselemente, welche in kodierter Form die Informationen zur Identifikation enthalten und zusammen Teile der Kennzeichnung beziehungsweise die Kennzeichnung selbst darstellen.

Die Schrift EP 0 601 679 A1 beschreibt ein Verfahren zur Kennzeichnung eines Gegenstandes mittels eines mit optischen Mitteln durch Bestrahlung mit Licht auswertbaren, geometrisch verschlüsselte Informationen enthaltenden, Musters, wobei auf der Oberfläche des Gegenstandes in räumlicher Zuordnung zu einem mittels Bestrahlung durch UV-Licht auswertbaren, aber für den menschlichen Betrachter nicht sichtbaren - Informationsmuster ein weiteres mittels sichtbaren Lichts auswertbares Informationsmuster vorgesehen ist, wobei die Auswertung der in beiden Kennzeichnungen enthaltenen Informationen ausschließlich mittels des durch Bestrahlung mit UV-Licht auswertbaren Informationsmusters erfolgen kann.

Die Schrift US 5,599,578 beschreibt eine Technik für das Etikettieren eines Gegenstandes zur Identifikation und/oder Überprüfung, bei der auf den Gegenstand eine Marke mit sichtbarer Farbe aufgebracht wird, wobei die Farbe einen ersten Bestandteil enthält, der für das Auge sichtbar ist, und einen zweiten Bestandteil enthält, der für das Auge nicht sichtbar ist und einen UV-Farbstoff enthält, der nur in der Anwesenheit einer ausgewählten UV-Strahlung sichtbar ist, oder einen IR-Farbstoff oder eine Farbe, die einen ausgewählten elektrischen Widerstand anzeigt, oder einen biologischen Marker.

Davon ausgehend liegt der Erfindung die Aufgabe zugrunde, ein Herstellungsverfahren für eine verbesserte maschinenelesbaren Codierung bereitzustellen.

Diese Aufgabe wird gemäß dem Hauptanspruch gelöst. Weiterbildungen der Erfindung sind Gegenstand der Unteransprüche.

Gemäß einem Beispiel nicht gemäss der beanspruchten Erfindung enthält ein gattungsgemäßes Sicherheitselement eine maschinenlesbare Codierung, deren Informationsgehalt mit bloßem Auge und ohne Hilfsmittel nicht erfassbar ist und die eine Grobcodierung mit geringem Informationsgehalt zur Erfassung mit einem niedrigauflösenden Sensor sowie eine innerhalb der Grobcodierung angeordnete Feincodierung mit höherem Informationsgehalt zur Erfassung mit einem gleichartigen, hochauflösenden Sensor aufweist.

Wesentlich ist dabei, dass die Grobcodierung und die Feincodierung auf Erfassung mit gleichartigen Sensoren ausgelegt sind, die sich nur in ihrem Auflösungsvermögen unterscheiden. Eine solche Codierung ermöglicht für das maschinelle Auslesen einen problemlosen Übergang von bereits vorhandenen Maschinen mit niedrigauflösenden Sensoren zu verbesserten Maschinen mit hochauflösenden Sensoren. Die bereits im Feld installierten Maschinen, die nur einen niedrigauflösenden Sensor enthalten, können weiterhin den Grobcodierungsanteil der Codierung erfassen. Darüber hinaus enthält die Codierung jedoch in ihrem Feincodierungsanteil zusätzliche Informationen, die mit den hochauflösenden Sensoren der verbesserten Maschinen gelesen werden können. Die verbesserten Maschinen können so nach und nach die bereits vorhandenen Maschinen ersetzen, da die Grobcodierung sowohl mit den niedrigauflösenden also auch mit den hochauflösenden Sensoren ausgelesen werden kann. Der Charakter der Grobcodierung, beispielsweise als Infrarot-Merkmal oder Magnet-Merkmal, ändert sich durch die hinzugefügte Feincodierung nicht, da die Feincodierung auf die Erfassung durch gleichartige Sensoren wie die Grobcodierung ausgelegt ist.

In einem Beispiel nicht gemäss der beanspruchten Erfindung ist vorgesehen, dass die Codierung zur Erfassung mit Infrarotsensoren ausgelegt ist und die Grobcodierung und die Feincodierung durch infrarot-absorbierendes Material enthaltende Bereiche gebildet sind. Vorzugsweise enthalten die Bereiche der Grobcodierung und der Feincodierung dasselbe infrarot-absorbierende Material. Die Infrarotsensoren sind dabei vorzugsweise auf eine Erfassung im Spektralbereich zwischen 800 nm und 1600 nm, insbesondere zwischen 800 nm und 1100 nm ausgelegt. Durch Sperrfilter kann der sichtbare Spektralbereich ausgeblendet werden.

Gemäß einem weiteren Beispiel nicht gemäss der beanspruchten Erfindung ist die Codierung zur Erfassung mit Lumineszenzsensoren ausgelegt und die Grobcodierung und die Feincodierung sind durch lumineszierendes Material enthaltende Bereiche gebildet. Der Begriff Lumineszenz umfasst dabei sowohl Fluoreszenz als auch Phosphoreszenz und sowohl Down-Conversion (Anregung bei höherer Strahlungsenergie als die Energie der Lumineszenzstrahlung) als auch Up-Conversion (Anregung bei niedrigerer Strahlungsenergie als die Energie der Lumineszenzstrahlung). Die Anregung kann im sichtbaren, infraroten oder ultravioletten Spektralbereich erfolgen. Die Stärke der Anregung und die erforderliche Empfindlichkeit des Sensors werden je nach dem oder den eingesetzten Lumineszenzstoff(-en) gewählt. Bei nachleuchtenden Stoffen (Phosphoreszenzstoffe) kann die Anregung zeitlich versetzt zur Prüfung erfolgen, wobei die zeitliche Differenz von der Nachleuchtdauer des eingesetzten Lumineszenzstoffs abhängig ist. Vorzugsweise enthalten die Bereiche der Grobcodierung und der Feincodierung dasselbe lumineszierende Material.
Nach einem Beispiel nicht gemäss der beanspruchten Erfindung ist die Codierung zur Erfassung mit Magnetsensoren ausgelegt und die Grobcodierung und die Feincodierung sind durch magnetisches Material enthaltende Bereiche gebildet. Die magnetischen Bereiche können insbesondere Hart- und/ oder Weicheisen und/ oder magnetische Materialien unterschiedlicher Koerzitivfeldstärke enthalten. Vorzugsweise enthalten die Bereiche der Grobcodierung und der Feincodierung dasselbe magnetische Material. Spurbasierte Magnetsensoren in Banknotenbearbeitungssystemen weisen typischerweise zwischen 3 und 200 Spuren auf. In jeder Spur werden das Vorhandensein und/ oder die Menge einer mit magnetischen Pigmenten versehenen Farbe auf der Banknote geprüft, die nahe am Sensor vorbeibewegt wird.

Selbstverständlich kann die Codierung auch durch eine Kombination der genannten Varianten verwirklicht werden.

In einem Beispiel nicht gemäss der beanspruchten Erfindung bildet die Grobcodierung einen 1-bit Code. Die Feincodierung bildet dagegen mit Vorteil einen Code mit einem Informationsgehalt von mindestens 2 bit, insbesondere einen eindimensionalen oder zweidimensionalen Barcode. Denkbare Varianten der Feincodierung sind auch ein Matrix- oder Pixelcode.
Die Feincodierung kann im Rand- oder Eckbereich oder auch im Inneren der Grobcodierung angeordnet sein. Die Grobcodierung kann eine beliebige Umrissform aufweisen, wobei gegenwärtig quadratische, rechteckige, runde, ovale, wabenförmige oder polygonal begrenzte Umrissformen bevorzugt sind.

Um das Vorhandensein einer Codierung bei visueller Betrachtung des Sicherheitselements zu verbergen, weisen die Grobcodierung und die Feincodierung im sichtbaren Spektralbereich vorzugsweise denselben Farbton auf und erscheinen insbesondere im sichtbaren Spektralbereich transparent. Die Grobcodierung und die Feincodierung können auch Teil eines im sichtbaren Spektralbereich sichtbaren Bildmotivs sein, um das Vorliegen einer codierten Information weiter zu tarnen.

In einem Beispiel nicht gemäss der beanspruchten Erfindung stellen die Grobcodierung und die Feincodierung unterschiedliche, nicht aufeinander bezogene Informationen dar. Die Information der Feincodierung kann insbesondere ein weiteres Echtheitsmerkmal und/ oder ein Logistikmerkmal darstellen, wie weiter unten genauer erläutert.

Bei einem Beispiel nicht gemäss der beanspruchten Erfindung ist die Codierung zusammen mit einer im sichtbaren Spektralbereich im Wesentlichen farbtongleichen Farbe als Infrarot-Schnitt, als Lumineszenz-Schnitt oder als Magnet-Schnitt ausgebildet.

In einem Beispiel nicht gemäss der beanspruchten Erfindung ist vorgesehen, dass die Codierung mehrfach auf dem Sicherheitselement vorliegt. Dadurch kann selbst bei einer Verschmutzung des Sicherheitselements, beispielsweise bei einer mit dem Sicherheitselement versehenen Banknote, bei der eine der Codierungen nicht mehr fehlerfrei auslesbar ist, auf eine andere noch auslesbare Codierung zurückgegriffen werden.

Die Erfindung enthält ein Verfahren zum Herstellen eines Sicherheitselements der oben beschriebenen Art, bei dem auf ein Substrat eine maschinenlesbare Codierung, deren Informationsgehalt mit bloßem Auge und ohne Hilfsmittel nicht erfassbar ist, aufgebracht wird, wobei die Codierung mit einer Grobcodierung mit geringem Informationsgehalt und mit einer innerhalb der Grobcodierung angeordneten Feincodierung mit höherem Informationsgehalt ausgebildet wird.

Die Grobcodierung wird im Stichdruck auf das Substrat aufgedruckt und die Feincodierung wird durch eine Lasermarkierung der Grobcodierung erzeugt. Diese Verfahrensvariante eignet sich für die Kombination von Stichdruck für die Grobcodierung und Lasermarkierung zur Erzeugung der Feincodierung.

Bei der Erzeugung der Kombinationscodierung im Stichdruck steht nur eine Druckplatte zur Verfügung. Über Schablonenplatten ist es möglich, diese eine Druckplatte mit bis zu fünf verschiedenen Einzelfarben partiell unterschiedlich einzufärben. Da sowohl druckende als auch nicht druckende Bereich eingefärbt werden, wird die überschüssige Farbe mittels Papier, Tuch oder eines Wischzylinders weggewischt, so dass anschließend nur die tiefer liegenden Stellen der Gravur Farbe aufweisen. Durch den Wischprozess kommt es zwangsläufig zu einer Vermischung der Farben in angrenzenden Bereichen und damit zu einer leichten Verschmutzung. Die Vermischungszone kann in Abhängigkeit der Farbführung und der Rheologie der Farben bis zu etwa 5 mm betragen. Mit reiner Stichdrucktechnik sind daher nur relativ grobe Codes realisierbar.

Für die Erzeugung einer Kombinationscodierung wird daher mit Vorteil zunächst die Grobcodierung im Stichdruck erzeugt und die Druckfarbe innerhalb der Grobcodierung dann durch Laserbeaufschlagung lokal abgetragen oder modifiziert, um die hochaufgelöste Feincodierung innerhalb der Grobcodierung zu erzeugen.

Das beschriebene Sicherheitselement kann durch ein eigenständiges Sicherheitselement gebildet sein, das separat erzeugt und dann auf ein Sicherheitspapier oder ein Wertdokument aufgebracht wird. Das Sicherheitselement kann aber auch direkt auf oder in einem Sicherheitspapier oder Wertdokument erzeugt werden, beispielsweise indem die Codierung auf das Sicherheitspapier oder das Substrat eines Wertdokuments aufgedruckt wird. Ein Beispiel, nicht gemäss der beanspruchten Erfindung umfasst auch ein Sicherheitspapier für die Herstellung von Sicherheits- und Wertdokumenten, wie Banknoten, Schecks, Ausweiskarten, Urkunden oder dergleichen, mit einem Sicherheitselement der beschriebenen Art, sowie einen Datenträger mit einem solchen Sicherheitselement. In beiden Fällen kann das Sicherheitselement zunächst separat erzeugt und das fertige Sicherheitselement dann auf das Sicherheitspapier oder Wertdokument übertragen werden, oder das Sicherheitselement kann direkt auf oder in dem Sicherheitspapier oder Wertdokument erzeugt werden. Bei dem Datenträger kann es sich insbesondere um eine Banknote, ein Wertdokument, einen Pass, eine Ausweis- oder Kreditkarte oder eine Urkunde handeln. Das beschriebene Sicherheitselement, Sicherheitspapier oder der Datenträger kann zur Absicherung von Gegenständen beliebiger Art eingesetzt werden. Weitere Ausführungsbeispiele sowie Vorteile der Erfindung werden nachfolgend anhand der Figuren erläutert. Zur besseren Anschaulichkeit wird in den Figuren auf eine maßstabs- oder proportionsgetreue Darstellung verzichtet.

Es zeigen:
- Fig. 1: eine schematische Darstellung einer Banknote mit einem Sicherheitselement,
- Fig. 2: die Verteilung des infrarot-absorbierenden Materials in der Codierung des Sicherheitselements der Fig.1,
- Fig. 3 und 4: das Erscheinungsbild der Banknote der Fig.1 für einen nied-rigauflösenden bzw. hochauflösenden Infrarotsensor,
- Fig. 5 bis 7: Banknoten mit Sicherheitselementen,
- Fig. 8 und 9: das Erscheinungsbild der Banknote der Fig. 7 für einen nied-rigauflösenden bzw. hochauflösenden Infrarotsensor,
- Fig.10: einen Querschnitt durch eine Banknote mit Sicherheitselement,
- Fig. 11: das visuelle Erscheinungsbild der Banknote der Fig. 10, und
- Fig. 12: das Erscheinungsbild der Banknote der Fig. 10 für einen hoch-auflösenden Infrarotsensor.

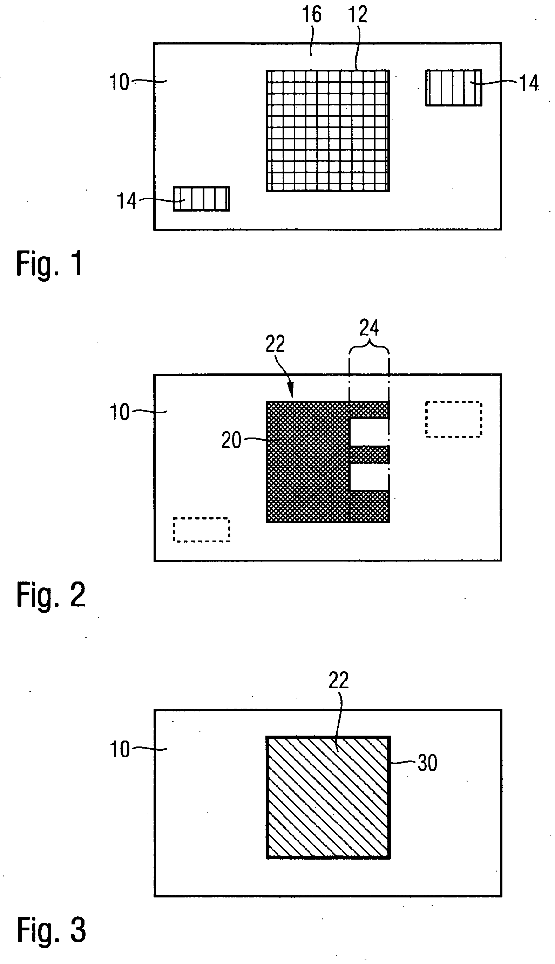

Die Erfindung wird nun am Beispiel einer Banknote erläutert. Fig. 1 zeigt dazu eine schematische Darstellung einer Banknote 10, die mit einem Sicherheitselement 12 ausgestattet ist. Das Sicherheitselement 12 enthält eine maschinenlesbare Codierung, deren Informationsgehalt mit bloßem Auge und ohne Hilfsmittel nicht erfassbar ist und nur mithilfe spezieller Sensoren ausgelesen werden kann.

Neben der Codierung weist die Banknote 10 typischerweise auch visuell erkennbare Farbbereiche 14 auf, die nur für das visuelle Erscheinungsbild verantwortlich sind und für die speziellen Auslese-Sensoren nicht in Erscheinung treten. Im sichtbaren Spektralbereich weisen die visuell erkennbaren Farbbereiche 14 und die Codierung des Sicherheitselements 12 in der Regel einen unterschiedlichen Farbton auf, wie durch die unterschiedlichen Schraffuren in Fig. 1 angedeutet. In vorteilhaften Ausgestaltungen ist die Codierung des Sicherheitselements 12 im sichtbaren Spektralbereich nicht zu erkennen und ist beispielsweise transparent oder im selben Farbton wie das Umfeld 16 der Codierung gehalten oder in einem anderen Druckelement versteckt.

In den nachfolgend genauer beschriebenen Beispielen ist die Codierung des Sicherheitselements 12 zur Erfassung mit Infrarotsensoren ausgelegt. Es ist jedoch auch möglich, die Codierung zur Erfassung mit Lumineszenzsensoren oder Magnetsensoren auszulegen, wie weiter oben beschrieben. Mit Bezug auf die Darstellung der Fig. 2 enthält die Codierung für die Erfassung mit Infrarotsensoren Bereiche 20 mit Infrarotabsorber, die sich im infraroten Spektralbereich deutlich von dem infrarot-reflektierenden Umfeld abheben. Alternativ kann die Codierung auch durch infrarot-reflektierende Bereiche in einem infrarot-absorbierenden Umfeld gebildet sein, wie weiter unten erläutert. Die maschinenlesbare Codierung des Sicherheitselements 12 enthält eine Kombination aus einer Grobcodierung 22 mit geringem Informationsgehalt, die zur Erfassung mit einem niedrigauflösenden Infrarotsensor bestimmt ist, und eine innerhalb der Grobcodierung 22 angeordnete Feincodierung 24 mit höherem Informationsgehalt, die zur Erfassung mit einem hochauflösenden Infrarotsensor bestimmt ist. Eine solche Kombinationscodierung bietet den Vorteil, dass bereits installierte Lesegeräte, die nur einen niedrigauflösenden Infrarotsensor enthalten, den Grobcodierungsanteil 22 der Codierung erfassen können, zugleich aber die Möglichkeit geschaffen ist, mit neueren Lesegeräten, die bereits einen hochauflösenden Infrarotsensor enthalten, die in der Feincodierung 24 enthaltenen weiteren Informationen auszulesen und zu verwerten.

Fig. 3 zeigt schematisch das Erscheinungsbild der Banknote 10 für einen niedrigauflösenden Infrarotsensor, dessen Messfeld 30 durch einen Rahmen angedeutet ist. Der Banknotenhintergrund und die visuell erkennbaren Farbbereiche 14 weisen eine sehr ähnliche Infrarotreflektivität auf und sind daher für den Infrarotsensor nicht unterscheidbar, während sich die Grobcodierung 22 aufgrund des enthaltenen infrarot-absorbierenden Materials deutlich von dem Banknotenhintergrund abhebt.

Die feinere Verteilung des Infrarotabsorbers in der Feincodierung 24 wird von dem niedrigauflösenden Infrarotsensor nicht aufgelöst, so dass der Flächenbereich der Feincodierung 24 innerhalb der Grobcodierung 22 gleichmäßig mit einer mittleren Infrarotabsorption erscheint, wie in Fig. 3 gezeigt. Die Grobcodierung 22 bildet einen 1-bit Code (vorhanden/ nicht vorhanden) und weist typischerweise eine Mindestgröße von 12 x 12 mm² auf. Neben der gezeigten quadratischen Form des Grobcodierungsbereichs kommen auch andere Umrissformen, beispielsweise rechteckige, runde, ovale, wabenförmige, polygonal begrenzte oder auch unregelmäßige Umrissformen in Betracht. Der Rand der Grobcodierungsbereichs kann scharf oder abgesoftet, beispielsweise aufgerastert sein.

Durch die Position der Grobcodierung 22 auf der Banknote 10 kann ein Quasicode realisiert sein. Beispielsweise kann die Grobcodierung 22 bei verschiedenen Denominationen einer Emission an verschiedenen Positionen auf der Banknote angeordnet sein.

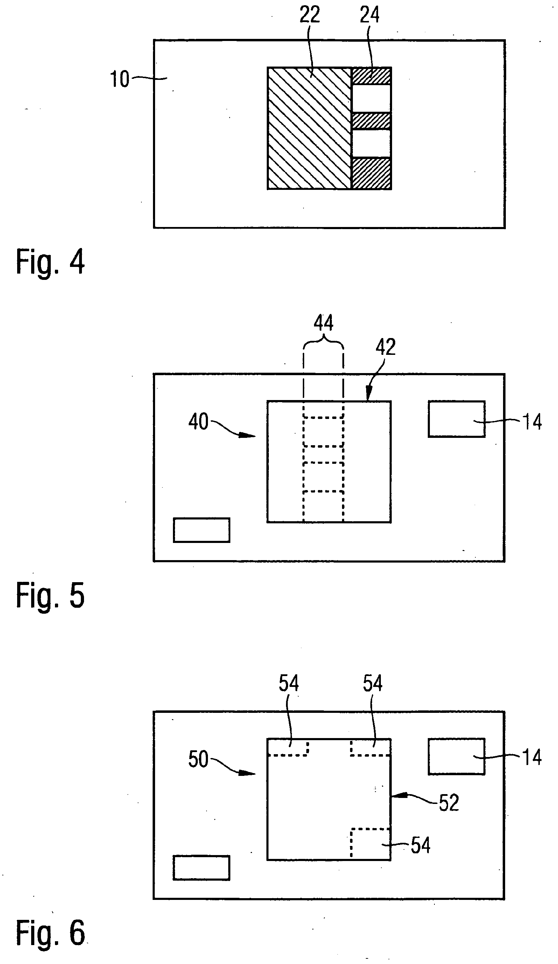

Fig. 4 zeigt nun schematisch das Erscheinungsbild der Banknote 10 für einen hochauflösenden Infrarotsensor. Auch hier sind der Banknotenhintergrund und die visuell erkennbaren Farbbereiche 14 aufgrund ihrer ähnlichen Infrarotreflektivität nicht unterscheidbar. Der hochauflösende Infrarotsensor kann jedoch innerhalb der Grobcodierung 22 zusätzlich die feinere Verteilung des Infrarotabsorbers in der Feincodierung 24 auflösen und damit deren Informationsgehalt auslesen. Im gezeigten Beispiel stellt die Feincodierung 24 einen eindimensionalen Barcode dar, es kommen jedoch auch alle anderen Arten von Codierungen in Betracht. Die Feincodierung bildet dabei vorzugsweise einen Code mit einem Informationsgehalt von mindestens 2 bit. Die Größe der Flächenbereiche, die jeweils ein Bit des Feincodierungscodes bilden, ist deutlich kleiner als bei der Grobcodierung und liegt typischerweise zwischen etwa 2 x 2 mm² und etwa 6 x 6 mm², wobei jedoch auch kleinere Flächenbereiche ab etwa 0,5 x 0,5 mm² infrage kommen. Auch hier kommen selbstverständlich andere als quadratische Flächenbereiche in Betracht.

Grob- und Feincodierung werden vorzugsweise im selben Wellenlängenbereich ausgelesen, die eingesetzten Infrarotsensoren unterscheiden sich nur durch ihre Auflösung. Auch sind die Informationen der Grob- und Feincodierung nicht voneinander abhängig oder ergänzen einander, vielmehr stellen Grob- und Feincodierung jeweils eigenständige Codierungen dar. Die weiteren Informationen der Feincodierung können insbesondere als Echtheitsmerkmal oder/und als Logistikmerkmal genutzt werden.

Beispielsweise kann eine Maschine mit niedrigauflösenden Sensoren das Vorhandensein eines Infrarot-Merkmals auf einer Banknote über die Position der Grobcodierung erkennen, während eine Maschine mit hochauflösenden Sensoren ein weiteres charakteristisches Merkmal erkennen kann, wie etwa das Emissionsdatum der Banknote. Die Feincodierung kann auch als Echtheitsmerkmal dienen, indem beispielsweise ein bestimmter Ziffernkreis mit einem speziellen Code gekoppelt wird, beispielsweise einer Prüfziffer. Die Zusatzinformation der Feincodierung kann dazu genutzt werden, die Echtheit der Banknote noch genauer zu prüfen als dies mit dem niedrigauflösenden Sensor möglich ist. Die Feincodierung kann insbesondere mit einem weiteren Merkmal verknüpft werden, wie etwa der genannten Prüfziffer oder einem magnetischen Merkmal. Die Fälschungssicherheit des Sicherheitselements mit Kombinationscodierung ist gegenüber einem Sicherheitselement, das nur mit der Grobcodierung ausgestattet ist, erhöht, da ein potentieller Fälscher den hochaufgelösten zusätzlichen Code entdecken und interpretieren muss.

Beim Einsatz als Logistikmerkmal kann die Feincodierung beispielsweise zur Unterscheidung neuer oder unterschiedlicher Substratqualitäten, oder bei einem Upgrade der Banknoten mit einem neuen Merkmal eingesetzt werden. Dies ermöglicht beispielsweise, gezielt Aussagen zu der Haltbarkeit neuer Substrate zu erhalten, Banknoten ohne das neue Merkmal gezielt vom Markt zu nehmen, oder auch die Adaption der Maschine anzupassen. Eine weitere Nutzungsmöglichkeit der Kombinationscodierung besteht darin, dass der hochauflösende Sensor ein neues Merkmal bei ansonsten nahezu gleicher Ausstattung der Banknote erkennen und die Adaption der Maschine automatisch ändern kann, um ein neues Merkmal, beispielsweise ein magnetisches Merkmal, gezielt zu lesen oder den Bereich eines neuen Merkmals gezielt auszusparen, was sich etwa bei Merkmalen in Form holographischer Patches oder eines Fensterbereichs der Banknote anbieten kann.

Die Grobcodierung 22 und die Feincodierung 24 der Fig. 2 weisen visuell den gleichen Farbton auf, um das Design der Banknote 10 nicht zu stören und um das Vorhandensein einer Codierung für den Nutzer zu verbergen. Alternativ können die Codierungen 22, 24 zu diesem Zweck im sichtbaren Spektralbereich unsichtbar sein oder visuell eine andere Form als die Form der Codierungen 22, 24 zeigen.

Zum Auslesen der Feincodierung 24 wird die Banknote 10 mit einer Lichtquelle beleuchtet, die zumindest im IR-Bereich emittiert. Ein hochaufgelöster Infrarotsensor enthält beispielsweise eine Zeilen- oder Matrixkamera. Im ersten Fall kann durch eine Bewegung der Banknote 10 ein zweidimensional aufgelöstes Bild erzeugt werden. Die Auflösung ergibt sich dabei aus der Pixelanzahl /Längeneinheit der Zeilenkamera, der Geschwindigkeit des Transports der Banknote und der Auslesegeschwindigkeit der Zeilenkamera. Die Auflösung einer Matrixkamera ergibt sich aus der Pixelanzahl/Fläche.

Sowohl Zeilen- als auch Matrixkameras sind vorzugsweise auf Erfassung im Bereich zwischen 800 nm und 1600 nm, vorzugsweise zwischen 800 nm und 1100 nm ausgelegt. Durch Einsatz eines Sperrfilters kann der sichtbare Spektralbereich ausgeblendet werden.

Für den hochauflösenden Sensor besteht auch die Möglichkeit, über eine genaue Ortsangabe innerhalb der Codierung eine Referenzfläche für den Hell-/Dunkelkontrast zu schaffen, um die Bildanalyse zu verbessern und damit auch eine bessere Zuordnung von infrarot-absorbierenden und nicht infrarot-absorbierenden Bereichen.

Ein weiteres Beispiel einer Banknote 10 mit einer maschinenlesbaren Kombinationscodierung 40 ist in Fig. 5 dargestellt. Die Kombinationscodierung 40 enthält, wie die in den Figuren 1 bis 4 dargestellte Codierung, eine Grobcodierung 42 und eine Feincodierung 44, wobei die Feincodierung 44 in Fig. 5 nicht im einen Randbereich, sondern im Inneren der Grobcodierung 42 angeordnet ist.

Auch die maschinenlesbare Kombinationscodierung 50 des Beispiels der Fig. 6 enthält eine Grobcodierung 52 und eine Feincodierung 54, wobei die Feincodierung 54 in diesem Beispiel um die Grobcodierung 52 herum gruppiert ist, und sich durch die vier Ecken des Grobcodierungsbereichs ergibt.

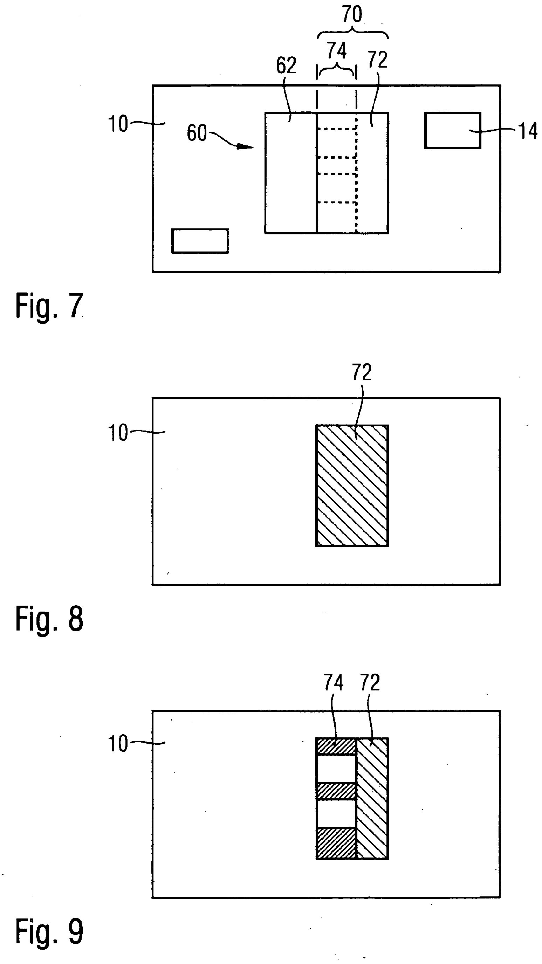

Fig. 7 zeigt ein weiteres Beispiel bei der die maschinenlesbare Kombinationscodierung 70 der Banknote 10 Teil eines Infrarot-Farbschnittes 60 ist. Der Infrarot-Farbschnitt 60 besteht aus einem im Infraroten nicht sichtbaren Farbbereich 62 und der im Infraroten sichtbaren Kombinationscodierung 70, wobei der Farbbereich 62 und die Kombinationscodierung 70 im sichtbaren Spektralbereich im Wesentlichen denselben Farbton aufweisen und Stoß and Stoß gedruckt sind. Visuell erscheint der Infrarot-Farbschnitt 60 daher als einheitliche Fläche mit einem Erscheinungsbild, wie in Fig.1 dargestellt.

Die maschinenlesbare Kombinationscodierung 70 enthält eine Grobcodierung 72 und eine Feincodierung 74, wobei die Feincodierung 74 an der Nahtstelle des Infrarot-Farbschnitts 60 angeordnet ist.

Ein niedrigauflösender Infrarotsensor kann die feinere Verteilung des Infrarotabsorbers in der Feincodierung 74 nicht auflösen und erkennt nur die Grobcodierung 72, wie in Fig. 8 dargestellt. Ein hochauflösender Infrarotsensor kann neben der Grobcodierung 72 auch die Feincodierung 74 auflösen, so dass sich für eine solchen Sensor das in Fig. 9 dargstellt Erscheinungsbild ergibt.

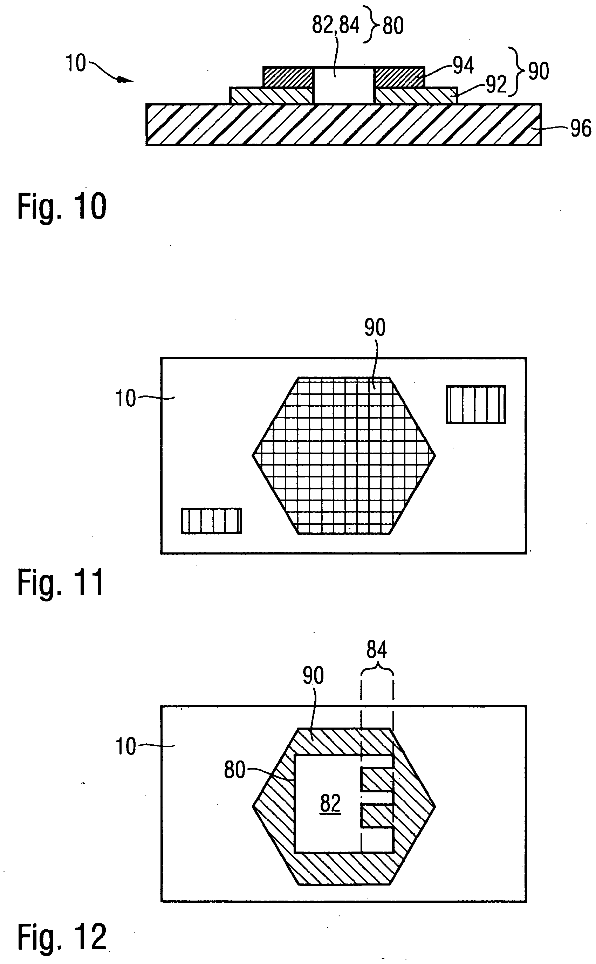

Die Kombinationscodierung kann auch durch infrarot-reflektierende Bereiche in einem infrarot-absorbierenden Umfeld gebildet sein, wie nunmehr anhand der Figuren 10 bis 12 erläutert. Dabei zeigt Fig. 10 schematisch einen Querschnitt durch eine Banknote 10 mit einer maschinenlesbaren Kombinationscodierung 80, Fig. 11 zeigt das visuelle Erscheinungsbild der Banknote 10 und Fig. 12 das Erscheinungsbild für einen hochauflösenden Infrarotsensor.

Mit Bezug zunächst auf Fig. 10 enthält die Banknote 10 eine Markierungsschicht 90, die aus einer im Offsetdruck auf das Banknotensubstrat 96 aufgedruckten infrarot-absorbierenden Untergrundschicht 92 und einer infrarot-absorbierenden Stichdruckschicht 94 besteht. Durch Laserbeaufschlagung wurde die Infrarotabsorption in den Bereichen 82, 84 der gewünschten Grob- und Feincodierung sowohl in der Untergrundschicht 92 als auch in der Stichdruckschicht 94 lokal gelöscht, so dass die Bereiche 82, 84 infrarot-reflektierende Bereiche vor einem infrarot-absorbierenden Hintergrund bilden.

Die Untergrundschicht 92 stellt eine gleichmäßige Infrarotabsorption der nicht mit Laserstrahlung beaufschlagten Flächenbereiche der Markierungsschicht 90 sicher. Die Löschung der Infrarotabsorption kann beispielsweise auf einer Entfernung oder einer Modifizierung der in den Schichten 92 und 94 enthaltenen Infrarotabsorber basieren. Grobcodierung 82 und Feincodierung 84 werden bei dieser Verfahrensvariante gemeinsam durch die Laseraufschlagung der Markierungsschicht 90 erzeugt.

Untergrund- und Markierungsschicht können selbst flächig oder als Muster strukturiert sein. Zudem können in der Untergrund- und Markierungsschicht derselbe aber auch unterschiedliche IR-Absorber verwendet werden.

Fig. 11 zeigt das visuelle Erscheinungsbild der Banknote 10, bei dem weder die Grob- noch die Feincodierung in Erscheinung tritt. Die Markierungsschicht 90 selbst kann insbesondere visuell sichtbar in Form eines gewünschten Motivs ausgebildet sein, kann visuell unsichtbar sein oder kann visuell sichtbar, jedoch in einem anderen Druckelement versteckt sein.

Fig. 12 zeigt das Erscheinungsbild der Banknote 10 für einen hochauflösenden Infrarotsensor, für den sowohl die Grobcodierung 82 als auch die Feincodierung 84 erkennbar ist. Wird die Kombinationscodierung 80 dagegen mit einem niedrigauflösenden Infrarotsensor erfasst (nicht gezeigt), so ist nur die Grobcodierung 82 erkennbar, während die Feincodierung 84 nicht aufgelöst wird.

## Patentansprüche

1. Verfahren zum Herstellen eines Sicherheitselements mit einer maschinenlesbaren Codierung, deren Informationsgehalt mit bloßem Auge und ohne Hilfsmittel nicht erfassbar ist, wobei die Codierung eine Grobcodierung mit geringem Informationsgehalt zur Erfassung mit einem niedrigauflösenden Sensor aufweist sowie eine innerhalb der Grobcodierung angeordnete Feincodierung mit höherem Informationsgehalt zur Erfassung mit einem gleichartigen, hochauflösenden Sensor, wobei das Verfahren den folgenden Schritt aufweist: Aufbringen einer maschinenlesbaren Codierung, deren Informationsgehalt mit bloßem Auge und ohne Hilfsmittel nicht erfassbar ist, auf ein Substrat, wobei die Codierung mit einer Grobcodierung mit geringem Informationsgehalt und mit einer innerhalb der Grobcodierung angeordneten Feincodierung mit höherem Informationsgehalt ausgebildet wird, **dadurch gekennzeichnet, dass** die Grobcodierung im Stichdruck auf das Substrat aufgedruckt wird und die Feincodierung durch eine Lasermarkierung der Grobcodierung erzeugt wird.

2. Verfahren nach Anspruch 1, **dadurch gekennzeichnet, dass** die Codierung zur Erfassung mit Infrarotsensoren ausgelegt ist und die Grobcodierung und die Feincodierung durch infrarot-absorbierendes Material enthaltende Bereiche gebildet sind oder dass die Codierung zur Erfassung mit Magnetsensoren ausgelegt ist und die Grobcodierung und die Feincodierung durch magnetisches Material enthaltende Bereiche gebildet sind oder dass die Codierung zur Erfassung mit Lumineszenzsensoren ausgelegt ist und die Grobcodierung und die Feincodierung durch lumineszierendes Material enthaltende Bereiche gebildet sind.

3. Verfahren nach Anspruch 1 oder 2, **dadurch gekennzeichnet, dass** die Grobcodierung einen 1-bit Code bildet oder dass die Feincodierung einen Code mit einem Informationsgehalt von mindestens 2 bit bildet oder dass die Feincodierung einen eindimensionalen oder zweidimensionalen Barcode bildet.

4. Verfahren nach wenigstens einem der Ansprüche 1 bis 3, **dadurch gekennzeichnet, dass** die Feincodierung im Rand- oder Eckbereich der Grobcodierung angeordnet ist oder dass die Feincodierung im Inneren der Grobcodierung angeordnet ist.

5. Verfahren nach wenigstens einem der Ansprüche 1 bis 4, **dadurch gekennzeichnet, dass** die Grobcodierung eine quadratische, rechteckige, runde, ovale, wabenförmige oder polygonal begrenzte Umrissform aufweist.

6. Verfahren nach wenigstens einem der Ansprüche 1 bis 5, **dadurch gekennzeichnet, dass** die Grobcodierung und die Feincodierung im sichtbaren Spektralbereich denselben Farbton aufweisen, insbesondere beide im sichtbaren Spektralbereich transparent oder weiß erscheinen.

7. Verfahren nach wenigstens einem der Ansprüche 1 bis 6, **dadurch gekennzeichnet, dass** die Grobcodierung und die Feincodierung Teil eines im sichtbaren Spektralbereich sichtbaren Bildmotivs sind.

8. Verfahren nach wenigstens einem der Ansprüche 1 bis 7, **dadurch gekennzeichnet, dass** die Grobcodierung und die Feincodierung Informationen unterschiedlicher Art darstellen.

9. Verfahren nach wenigstens einem der Ansprüche 1 bis 8, **dadurch gekennzeichnet, dass** die Codierung zusammen mit einer im sichtbaren Spektralbereich im Wesentlichen farbtongleichen Farbe als Infrarot-Schnitt, als Lumineszenz-Schnitt oder als Magnet-Schnitt ausgebildet ist.

10. Verfahren nach wenigstens einem der Ansprüche 1 bis 9, **dadurch gekennzeichnet, dass** die Codierung mehrfach auf dem Sicherheitselement vorliegt.

11. Verfahren nach wenigstens einem der Ansprüche 1 bis 10, **dadurch gekennzeichnet, dass** ein Sicherheitspapier für die Herstellung von Sicherheits- und Wertdokumenten, wie Banknoten, Schecks, Ausweiskarten, Urkunden oder dergleichen, mit dem Sicherheitselement versehen wird.

12. Verfahren nach wenigstens einem der Ansprüche 1 bis 10, **dadurch gekennzeichnet, dass** ein Datenträger, insbesondere Markenartikel, Wertdokumente und dergleichen, mit dem Sicherheitselement versehen wird.

## Claims

1. A method for manufacturing a security element having a machine-readable code whose information content is not detectible with the naked eye and without auxiliary means, the code exhibiting a coarse code having low information content for detection with a low-resolution sensor and, arranged within the coarse code, a fine code having higher information content for detection with a high-resolution sensor of the same kind, the method comprising a step of applying to a substrate a machine-readable code whose information content is not detectible with the naked eye and without auxiliary means, the code being developed having a coarse code having low information content and having a fine code having higher information content arranged within the coarse code, **characterized in that** the coarse code is imprinted on the substrate in intaglio printing, and that the fine code is produced by a laser marking of the coarse code.

2. The method according to claim 1, **characterized in that** the code is designed for detection with infrared sensors, and the coarse code and the fine code are formed by regions including infrared-absorbent material, or that the code is designed for detection with magnet sensors, and the coarse code and the fine code are formed by regions including magnetic material, or that the code is designed for detection with luminescence sensors, and the coarse code and the fine code are formed by regions including luminescent material.

3. The method according to claim 1 or 2, **characterized in that** the coarse code forms a 1-bit code, or that the fine code forms a code having an information content of at least 2 bits, or that the fine code forms a one-dimensional or two-dimensional barcode.

4. The method according to at least one of claims 1 to 3, **characterized in that** the fine code is arranged in the border or corner region of the coarse code, or that the fine code is arranged in the interior of the coarse code.

5. The method according to at least one of claims 1 to 4, **characterized in that** the coarse code exhibits a quadratic, rectangular, round, oval, honeycomb-shaped or polygonally delimited contour shape.

6. The method according to at least one of claims 1 to 5, **characterized in that** the coarse code and the fine code exhibit the same color tone in the visible spectral range, especially both appear transparent or white in the visible spectral range.

7. The method according to at least one of claims 1 to 6, **characterized in that** the coarse code and the fine code are part of an image motif that is visible in the visible spectral range.

8. The method according to at least one of claims 1 to 7, **characterized in that** the coarse code and the fine code depict different kinds of information.

9. The method according to at least one of claims 1 to 8, **characterized in that** the code, together with an ink that is substantially the same color tone in the visible spectral range, is developed as an infrared edging, as a luminescence edging or as a magnet edging.

10. The method according to at least one of claims 1 to 9, **characterized in that** the code is multiply present on the security element.

11. The method according to at least one of claims 1 to 10, **characterized in that** a security paper for manufacturing security and value documents, such as banknotes, checks, identification cards, certificates or the like, is provided with the security element.

12. The method according to at least one of claims 1 to 10, **characterized in that** a data carrier, especially branded articles, value documents and the like, is provided with the security element.

## Revendications

1. Procédé destiné à fabriquer un élément de sécurité avec un codage lisible par machine, dont la teneur informative n'est pas détectable à l'oeil nu et sans moyen auxiliaire, le codage comportant un codage grossier avec une faible teneur informative, destiné à être détecté par un capteur à basse résolution, ainsi qu'un codage fin placé à l'intérieur du codage grossier, avec une teneur informative plus élevée, destiné à être détecté par un capteur de même type, à haute résolution, le procédé comportant l'étape suivante : de l'application d'un codage lisible par machine dont la teneur informative n'est pas détectable à l'oeil nu et sans moyen auxiliaire sur un substrat, le codage étant réalisé avec un codage grossier avec une faible teneur informative et un codage fin placé à l'intérieur du codage grossier, avec une teneur informative plus élevée, **caractérisé en ce**
**qu'**on imprime le codage grossier par impression en taille douce sur le substrat et **en ce qu'**on créé le codage fin par un marquage au laser du codage grossier.

2. Procédé selon la revendication 1, **caractérisé en ce que** le codage est conçu pour être détecté par des capteurs à infrarouge et le codage grossier et le codage fin sont formés par des zones contenant une matière absorbant les infrarouges ou **en ce que** le codage est conçu pour être détecté par des capteurs magnétiques et le codage grossier et le codage fin sont formés par des zones contenant une matière magnétique ou **en ce que** le codage est conçu pour être détecté par des capteurs de luminescence et le codage grossier et le codage fin sont formés par des zones contenant une matière luminescente.

3. Procédé selon la revendication 1 ou 2, **caractérisé en ce que** le codage grossier forme un code à 1 bit ou **en ce que** le codage fin forme un code avec une teneur informative d'au moins 2 bits ou **en ce que** le codage fin forme un code barre unidimensionnel ou bidimensionnel.

4. Procédé selon au moins l'une quelconque des revendications 1 à 3, **caractérisé en ce que** le codage fin est placé dans la zone de bordure ou dans la zone d'angle du codage grossier ou **en ce que** le codage fin est placé à l'intérieur du codage grossier.

5. Procédé selon au moins l'une quelconque des revendications 1 à 4, **caractérisé en ce que** le codage grossier présente une forme de contour limitée carrée, rectangulaire, ronde, ovale, alvéolaire ou polygonale.

6. Procédé selon au moins l'une quelconque des revendications 1 à 5, **caractérisé en ce que** dans le domaine spectral visible, le codage grossier et le codage fin présentent la même nuance de couleur, notamment **en ce que** les deux apparaissent transparents ou blancs dans le domaine spectral visible.

7. Procédé selon au moins l'une quelconque des revendications 1 à 6, **caractérisé en ce que** le codage grossier et le codage fin sont une partie d'un motif visible dans le domaine spectral visible.

8. Procédé selon au moins l'une quelconque des revendications 1 à 7, **caractérisé en ce que** le codage grossier et le codage fin représentent des informations de différentes natures.

9. Procédé selon au moins l'une quelconque des revendications 1 à 8, **caractérisé en ce que** le codage est conçu en commun avec une couleur sensiblement de même nuance dans le domaine spectral visible en tant que montage infrarouge, en tant que montage luminescent ou en tant que montage magnétique.

10. Procédé selon au moins l'une quelconque des revendications 1 à 9, **caractérisé en ce que** le codage est présent plusieurs fois sur l'élément de sécurité.

11. Procédé selon au moins l'une quelconque des revendications 1 à 10, **caractérisé en ce que** pour produire des documents de sécurité et des documents de valeur, comme des billets de banque, des chèques, des cartes d'identité, des actes ou similaires, on munit un papier de sécurité avec l'élément de sécurité.

12. Procédé selon au moins l'une quelconque des revendications 1 à 10, **caractérisé en ce qu'**on munit un support de données, notamment des articles de marque, des documents de valeur et similaires avec l'élément de sécurité.
